# EUROPEAN PATENT APPLICATION

(11) **EP 4 481 911 A1**
(43) Date of publication of application: **25.12.2024**
(21) Application number: 22928194.4
(22) Date of filing: 21.09.2022
(51) Int. Cl.: H01M 50/172, H01M 10/052, H01M 50/531, B23K 26/21

(54) **BATTERY CELL, BATTERY, AND ELECTRICAL APPARATUS**

(30) Priority: 25.02.2022 WO PCT/CN2022/077890
(71) Applicant: Contemporary Amperex Technology (Hong Kong) Limited, Central, Central And Western District (HK)
(72) Inventor: XING, Chengyou, Ningde, Fujian 352100 (CN); SU, Huasheng, Ningde, Fujian 352100 (CN); LI, Quankun, Ningde, Fujian 352100 (CN); ZHUO, Weirong, Ningde, Fujian 352100 (CN); JIN, Haizu, Ningde, Fujian 352100 (CN)
(74) Representative: Rowlands, Stuart Michael
(86) International application number: PCT/CN2022/120299
(87) International publication number: WO 2023/159928

(57) **Abstract**

Provided are a battery cell (7), a battery (2), and an electrical apparatus. The battery cell (7) comprises an outer casing (20), electrode lead members (30), an electrode assembly (10), and an adapter component (40). The outer casing (20) is provided with an accommodation chamber. The electrode lead members (30) are arranged on the outer casing (20). The electrode assembly (10) is accommodated in the accommodation chamber, and the electrode assembly (10) comprises a main body part (11) and a tab (12) led out from the main body part (11). The adapter component (40) is used for connecting the tab (12) and the electrode lead members (30), and light-absorbing layers (50) coats welding positions of the adapter component (40). By coating the surface of the adapter component (40) with the light-absorbing layers (50), light reflection is reduced, an energy absorption rate of the adapter component (40) is improved, and welding power is reduced, thereby reducing the possibility that other components of the battery cell (7) are burnt, and improving the safety of the battery cell (7).

## Description

### CROSS-REFERENCE TO RELATED APPLICATIONS

This application claims priority to International Patent Application No. PCT/CN2022/077890, filed on February 25, 2022 and entitled "BATTERY CELL, MANUFACTURING METHOD THEREOF, AND MANUFACTURING SYSTEM THEREOF, BATTERY, AND ELECTRIC APPARATUS", which is incorporated herein by reference in its entirety.

### TECHNICAL FIELD

This application relates to the field of battery technologies, and more specifically, to a battery cell, a battery, and an electric apparatus.

### BACKGROUND

Battery cells are widely used in electronic devices such as mobile phones, notebook computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, and the like.

In the development of battery technologies, how the performance of battery cells is improved is a research direction in battery technologies.

### SUMMARY

This application provides a battery cell, a battery, and an electric apparatus, which can improve the performance of the battery cell.

According to a first aspect, an embodiment of this application provides a battery cell, including a housing, an electrode lead-out member, an electrode assembly, an adapter member, and a light absorbing layer. A housing is provided with an accommodating cavity. The electrode lead-out member is disposed at the housing. The electrode assembly is accommodated in the accommodating cavity, where the electrode assembly includes a main body portion and a tab led out of the main body portion. The adapter member is configured to connect the tab and the electrode lead-out member. The light absorbing layer is applied to a welding position of the adapter member.

In the foregoing technical solution, the light absorbing layer is applied to the surface of the adapter member to reduce reflection, increasing the energy absorption rate of the adapter member, and lowering the welding power, and reducing the possibility of other components of the battery cell being burned, thus improving the safety of the battery cell.

In some embodiments, the adapter member is welded to at least one of the tab and the electrode lead-out member to form a welded portion, and at least part of the light absorbing layer is disposed around the welded portion.

In the foregoing technical solution, the part of the light absorbing layer retained around the welded portion can reduce the risk of laser irradiation in the region of the adapter member uncoated with the light absorbing layer during the welding process, thereby reducing energy waste. In addition, the light absorbing layer can further absorb scattered laser, reduce laser reflection, and fully absorb heat, thereby reducing the welding power.

In some embodiments, the at least part of the light absorbing layer surrounds the welded portion.

The foregoing technical solution can reduce the risk of laser irradiation due to an error in the region of the adapter member uncoated with the light absorbing layer, and improve the energy utilization rate. The annular light absorbing layer can further absorb scattered laser, reduce laser reflection, and fully absorb heat, thereby reducing the welding power.

In some embodiments, the light absorbing layer and the welded portion are different in color.

In the assembly process of the battery cell, the adapter member can be positioned with the welded portion as a reference. The foregoing technical solution causes a color difference between the light absorbing layer and the welded portion, making it easier for an external detection device to detect a location of the welded portion. This helps to position the adapter member and improve the assembly efficiency of the battery cell.

In some embodiments, the light absorbing layer is black.

In the foregoing technical solution, the black light absorbing layer has better light absorbing property, and can reduce reflection, increase the energy absorption rate, lower the welding power, and reduce the possibility of other components of the battery cell being burned, thus improving the safety of the battery cell.

In some embodiments, the light absorbing layer includes a chromium-containing material.

In the foregoing technical solution, the chromium-containing material has good light-absorbing property.

In some embodiments, an amount of chromium contained in the welded portion is greater than an amount of chromium contained in an unwelded portion of the adapter member.

In the foregoing technical solution, part of the chromium-containing metal melts into the welded portion during the welding process. These chromium-containing metals are conductive, ensuring the current-carrying capacity of the welded portion even if the chromium-containing metal melts into the welded portion.

In some embodiments, the adapter member includes a protrusion, and the welded portion is formed at the protrusion. The adapter member is provided with a first recess at a position corresponding to the protrusion. The light absorbing layer is at least applied to a bottom surface of the first recess.

In the foregoing technical solution, the first recess can position the light absorbing layer, facilitating the application of the light absorbing layer. The protrusion protrudes at a position corresponding to the first recess, which ensures both the depth of the first recess and the strength of the welded portion.

In some embodiments, the adapter member further includes a base, the base has a first surface and a second surface opposite each other, the protrusion protrudes from the first surface, and the first recess is recessed relative to the second surface. The light absorbing layer is further applied to the second surface.

In the foregoing technical solution, during application of the light absorbing layer, a coating device can apply it directly to the entire first connecting portion without positioning the first recess, thereby improving the coating efficiency.

In some embodiments, the protrusion is used for welding with the tab to form the welded portion.

In the foregoing technical solution, the protrusion can be embedded into the tab to ensure tight contact between the protrusion and the tab, reducing the risk of false welding and increasing the strength of the welded portion.

In some embodiments, the thickness of the light absorbing layer is 0.1 µm-50 µm. Preferably, the thickness of the light absorbing layer is 0.8 µm-25 µm.

The smaller the thickness of the light absorbing layer, and the lower the energy absorbed by the light absorbing layer. If the thickness of the light absorbing layer is too small, the energy absorbed by the light absorbing layer is relatively low, and the power required for welding is still relatively high. The greater the thickness of the light absorbing layer, the more space and weight the light absorbing layer occupies, and the higher the material cost. The foregoing technical solution limits the thickness of the light absorbing layer to 0.1 µm-50 µm, to minimize the thickness of the light absorbing layer while ensuring the energy absorption rate of the light absorbing layer.

In some embodiments, a surface of the adapter member coated with the light absorbing layer is provided with multiple second recesses, and the multiple second recesses are arranged on an outer side of the welded portion.

In the foregoing technical solution, the adapter member is provided with the multiple second recesses, resulting in an uneven surface of the adapter member, thus further reducing reflection, increasing the energy absorption rate of the adapter member, and lowering the welding power, reducing the possibility of other components of the battery cell being burned, so as to improve the safety of the battery cell.

In some embodiments, the light absorbing layer surrounds an outer side of each of the second recesses.

In the foregoing technical solution, the concave surface of the second recess can reduce the high reflection frequency, and the light absorbing layer surrounding the outer side of the second recess can absorb light. The combination of the two can better reduce reflection, improve the energy absorption rate, and reduce the welding power.

In some embodiments, the light absorbing layer covers a bottom surface of the second recess.

In the foregoing technical solution, the area of the light absorbing layer and the energy absorption rate can be increased, and the coating process of the light absorbing layer can be also simplified.

In some embodiments, a thickness of the light absorbing layer is less than a depth of the second recess.

The foregoing technical solution can avoid the second recess being filled up by the light absorbing layer, thereby retaining the concave structure on the adapter member, reducing the high reflection frequency, increasing the energy absorption rate, and reducing the welding power.

In some embodiments, the depth of the second recess is 0.01 mm-0.5 mm.

The greater the depth of the second recess, the smaller the thickness of part of the adapter member opposite the bottom surface of the second recess. If the depth of the second recess is too great, a local part of the adapter member may be welded through, leading to insufficient strength of the welded portion. The smaller the depth of the second recess, the worse the effect of reducing the high reflection frequency of the second recess. The foregoing technical solution limits the depth of the second recess to 0.01 mm-0.5 mm, on the premise of ensuring the strength of the welded portion, reducing the high reflection frequency, increasing the energy absorption rate, and reducing the welding power.

In some embodiments, an area of the second recess is 0.04 mm²-200 mm². Preferably, the area of the second recess is 0.25 mm²-100 mm².

The smaller the area of the second recess, the greater the number of second recesses to be provided on the adapter member, increasing the process difficulty. The larger the area of the second recess, the worse the effect of reducing the high reflection frequency of the second recess. The foregoing solution limits the area of the second recess to 0.04 mm²-200 mm², to balance a process requirement and the effect of reducing the high reflection frequency of the second recess.

In some embodiments, a spacing between adjacent second recesses is 0.1 mm-5 mm.

The smaller the spacing between adjacent second recesses, the greater the number of second recesses to be provided on the adapter member, increasing the process difficulty. The larger the spacing between adjacent second recesses, the worse the effect of reducing the high reflection frequency of the second recess. The foregoing technical solution limits the spacing between adjacent second recesses to 0.1 mm-5 mm, to balance a process requirement and the effect of reducing the high reflection frequency of the second recess.

In some embodiments, surface roughness of part of the adapter member coated with the light absorbing layer is greater than surface roughness of part of the adapter member uncoated with the light absorbing layer.

In the foregoing technical solution, increasing the surface roughness of part of the adapter member coated with the light absorbing layer allows the light absorbing layer to better adhere to the adapter member, enhancing the connection strength between the adapter member and the light absorbing layer, and reducing the risk of the light absorbing layer falling off.

In some embodiments, the adapter member abuts against and is welded to an end face of the tab back away from the main body portion, so as to form the welded portion.

In some embodiments, the main body portion includes a separator configured to separate a positive electrode plate and a negative electrode plate, and a distance between a region of the end face used for welding to the adapter member and the separator is 0.2 mm-3 mm.

In the foregoing technical solution, the size of the tab protruding from the main body portion is small, thereby reducing the space occupied by the tab and increasing the energy density of the battery cell. In this technical solution, setting a light absorbing layer reduces heat generated during the welding process by, thus ensuring that the main body portion is not easily burned even if the size of the tab protruding from the main body portion is small.

In some embodiments, the distance between the region of the end face used for welding to the adapter member and the separator is 0.2 mm-1 mm.

In some embodiments, the tab and the end face of the adapter member are formed through flattening.

In the foregoing technical solution, the flattened end face can better fit with the adapter member, thereby enhancing the connection strength between the tab and the adapter member.

According to a second aspect, an embodiment of this application provides a battery including multiple battery cells according to any one of the embodiments of the first aspect.

According to a third aspect, an embodiment of this application provides an electric apparatus including the battery cell according to any one of the embodiments of the first aspect, where the battery cell is configured to supply electric energy.

### BRIEF DESCRIPTION OF DRAWINGS

To describe the technical solutions in the embodiments of this application more clearly, the following briefly describes the accompanying drawings required for describing the embodiments of this application. It will be apparent that the accompanying drawings in the following description show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery module shown in FIG. 2;
FIG. 4 is a schematic structural diagram of a battery cell according to some embodiments of this application;
FIG. 5 is a schematic exploded view of a battery cell shown in FIG. 4, where an adapter member is not bent;
FIG. 6 is a schematic cross-sectional view of the battery cell shown in FIG. 4;
FIG. 7 is a schematic enlarged view of the battery cell at circle A in FIG. 6;
FIG. 8 is a schematic structural diagram of an adapter member of a battery cell according to some embodiments of this application;
FIG. 9 is a schematic diagram of an assembly process of a battery cell according to some embodiments of this application;
FIG. 10 is a schematic structural diagram of an adapter member of a battery cell according to some other embodiments of this application;
FIG. 11 is a schematic diagram of an assembly process of a battery cell according to some other embodiments of this application;
FIG. 12 is a schematic enlarged view of the battery cell at circle B in FIG. 11;
FIG. 13 is a locally schematic cross-sectional view of the battery cell shown in FIG. 11;
FIG. 14 is a schematic exploded view of a battery cell according to still some other embodiments of this application;
FIG. 15 is a schematic cross-sectional view of the battery cell shown in FIG. 14; and
FIG. 16 is a schematic enlarged view of the battery cell at circle C in FIG. 15.

In the accompanying drawings, the figures are not necessarily drawn to scale.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. It will be apparent that the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "multiple" means more than two (inclusive).

The battery mentioned in the embodiments of this application is a single physical module that includes one or more battery cells for providing higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The positive electrode current collector includes a positive electrode coated region and a positive electrode tab connected to the positive electrode coated region. The positive electrode coated region is coated with the positive electrode active substance layer, and the positive electrode tab is coated with no positive electrode active substance layer. A lithium-ion battery cell is used as an example, for which, the positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode coated region and a negative electrode tab connected to the negative electrode coated region. The negative electrode coated region is coated with the negative electrode active substance layer, and the negative electrode tab is coated with no negative electrode active substance layer. The negative electrode current collector may be made of copper, the negative electrode active substance layer includes a negative electrode active substance, and the negative electrode active substance may be carbon, silicon, or the like. The separator may be made of PP (polypropylene), PE (polyethylene), or the like.

The battery cell further includes a housing, an electrode lead-out member, an adapter member. An accommodating cavity is formed in the housing for accommodating the electrode assembly, and the electrode lead-out member is mounted on the housing. The housing can protect the electrode assembly from the outside to prevent external foreign matters from affecting charging or discharging of the electrode assembly. The electrode lead-out member is configured for electrical connection with the tab of the electrode assembly, to lead out the electric energy generated by the electrode assembly. The adapter member is configured to connect the electrode lead-out member and the tab, to electrically connect the electrode lead-out member with the tab.

In the related art, welding is usually used for connecting the tab or the electrode lead-out member to the adapter member. For example, the adapter member may be enabled to abut against the tab, and then laser is irradiated onto the adapter member, melting and connecting part of the adapter member and part of the tab.

The inventors have found that during the welding process, the adapter member reflects the laser, resulting in insufficient connection strength between the adapter member and the tab, and affecting the product yield. To ensure effective connection between the tab and the adapter member, the inventors increased the laser input power, so that even if laser is reflected, the depth of the molten pool can be guaranteed, ensuring that the connection strength between the adapter member and the tab meets a requirement. However, after the input power is increased, the heat generated by welding also increases, which causes other components of the battery cell to be easily burned, thus leading to a safety hazard. When the input power is too high, the adapter member and the tab may be directly welded through, causing the laser to directly irradiate other components, leading to product scrapping.

In view of this, the embodiments of this application provide a technical solution where the battery cell includes a housing, an electrode lead-out member, an electrode assembly, an adapter member, and a light absorbing layer. A housing is provided with an accommodating cavity. The electrode lead-out member is disposed at the housing. The electrode assembly is accommodated in the accommodating cavity, where the electrode assembly includes a main body portion and a tab led out of the main body portion. The adapter member is configured to connect the tab and the electrode lead-out member. The light absorbing layer is applied to a welding position of the adapter member. In this technical solution, the light absorbing layer is applied to the surface of the adapter member to reduce reflection, increasing the energy absorption rate of the adapter member, and lowering the welding power, and reducing the possibility of other components of the battery cell being burned, thus improving the safety of the battery cell.

The technical solution described in the embodiments of this application is applicable to batteries and electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

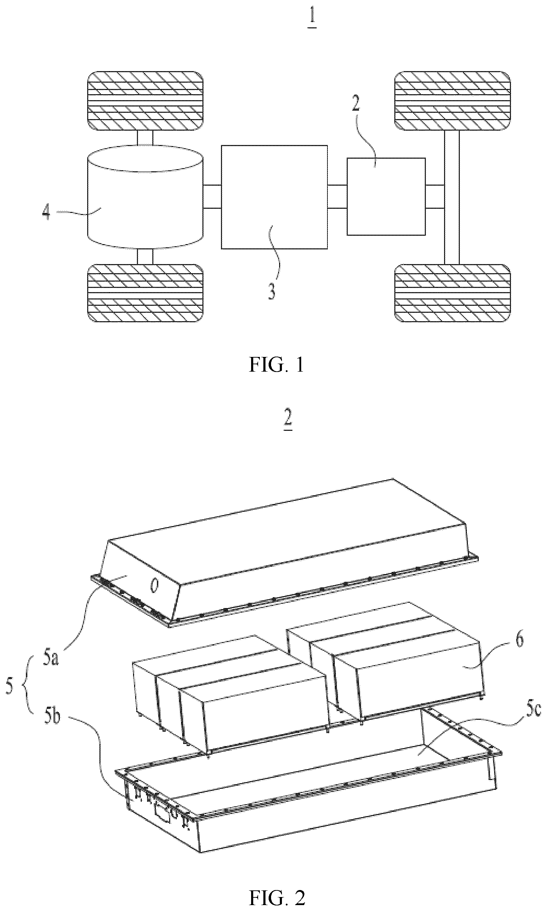

FIG. 1 is a schematic structural diagram of a vehicle according to some embodiments of this application.

As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power supply for the vehicle 1.

The vehicle 1 may further include a controller 3 and a motor 4, and the controller 3 is configured to control the battery 2 to supply power to the motor 4, for example, to satisfy a working electricity need during start, navigation, and driving of the vehicle 1.

In some embodiments of this application, the battery 2 can be used as not only the operational power supply for the vehicle 1 but also a driving power supply for the vehicle 1, replacing all or a part of the fossil fuel or the natural gas to provide driving power for the vehicle 1.

FIG. 2 is a schematic exploded view of a battery according to some embodiments of this application.

As shown in FIG. 2, the battery 2 includes a box 5 and a battery cell (not shown), and the battery cell is accommodated in the box 5.

The box 5 is configured to accommodate the battery cell, and the box 5 may have various structures. In some embodiments, the box 5 may include a first box portion 5a and a second box portion 5b. The first box portion 5a and the second box portion 5b fit together to jointly define an accommodating space 5c for accommodating the battery cell. The second box portion 5b may be a hollow structure with an opening formed at an end, the first box portion 5a is a plate-shaped structure, and the first box portion 5a covers the opening side of the second box portion 5b so as to form the box 5 having the accommodating space 5c; and the first box portion 5a and the second box portion 5b may alternatively both be a hollow structure with an opening formed on a side, and the opening side of the first box portion 5a is engaged with the opening side of the second box portion 5b so as to form the box 5 having the accommodating space 5c. Certainly, the first box portion 5a and the second box portion 5b may be in various shapes, such as cylinder and cuboid.

In order to improve the airtightness after the connection of the first box portion 5a and the second box portion 5b, a sealing member such as sealing gum and sealing ring may also be disposed between the first box portion 5a and the second box portion 5b.

Assuming that the first box portion 5a fits on a top of the second box portion 5b, the first box portion 5a may also be referred to as an upper cover, and the second box portion 5b may also be referred to as a lower box.

There may be one or more battery cells in the battery 2. Under the condition that multiple battery cells are provided, the multiple battery cells may be connected in series, parallel, or series-parallel, where being connected in series-parallel means a combination of series and parallel connections of the multiple battery cells. The multiple battery cells may be directly connected in series, parallel, or series-parallel, and then an entirety of the multiple battery cells is accommodated in the box 5; or certainly, the battery may be formed by multiple battery cells being connected in series, parallel, or series-parallel first to form a battery module 6 and then multiple battery modules 6 being connected in series, parallel, or series-parallel to form an entirety, which is accommodated in the box 5.

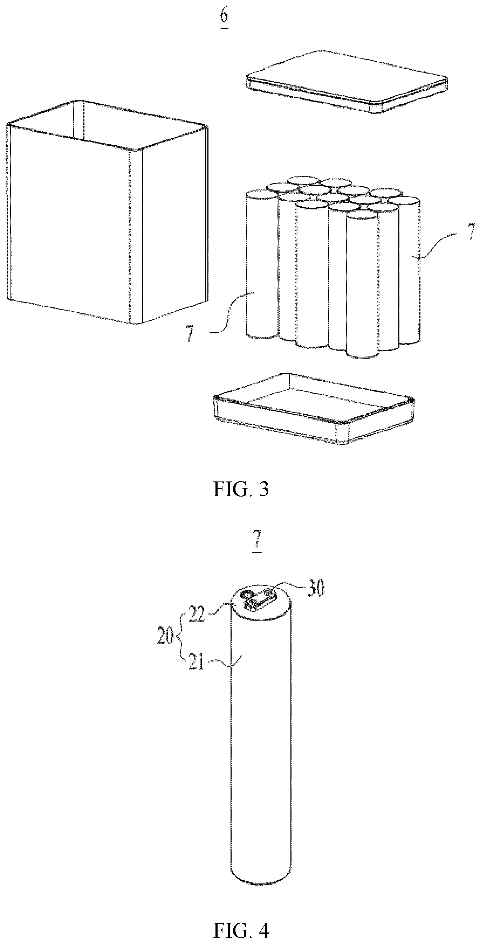

FIG. 3 is a schematic exploded view of a battery module shown in FIG. 2.

In some embodiments, as shown in FIG. 3, there are multiple battery cells 7, and the multiple battery cells 7 are connected in series, parallel, or series-parallel to form a battery module 6. Multiple battery modules 6 are then connected in series, parallel, or series-parallel to form an entirety which is accommodated in the box.

The multiple battery cells 7 in the battery module 6 may be electrically connected via a busbar, so that the multiple battery cells 7 in the battery module 6 are connected in series, parallel, or series-parallel.

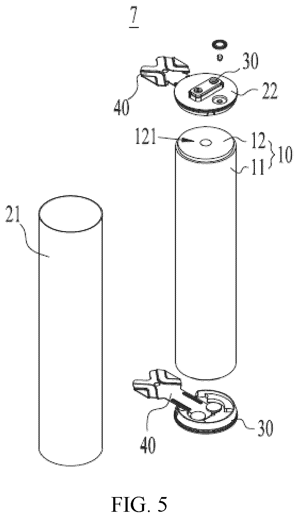

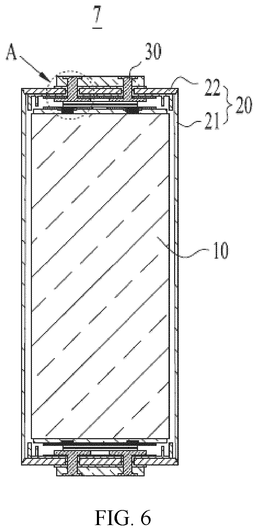

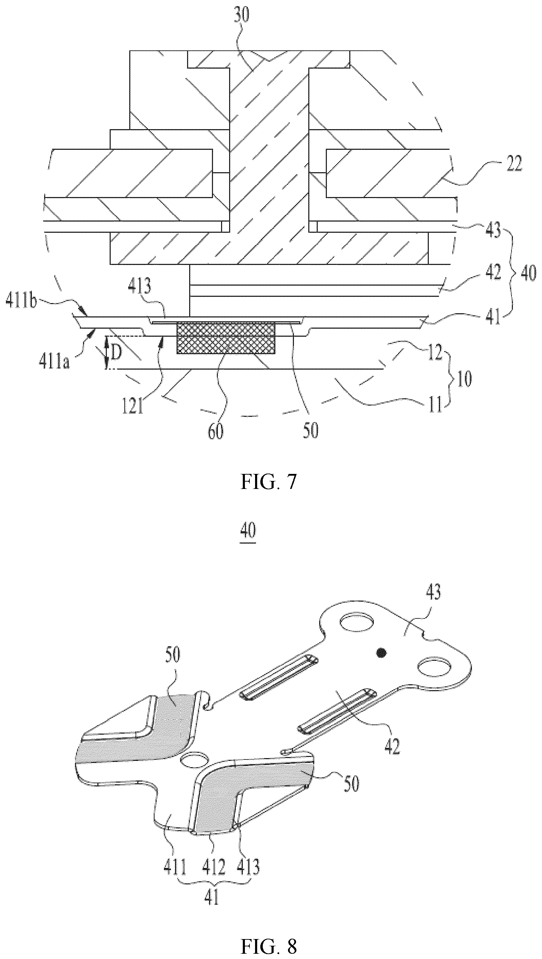

FIG. 4 is a schematic structural diagram of a battery cell according to some embodiments of this application; FIG. 5 is a schematic exploded view of a battery cell shown in FIG. 4, where an adapter member is not bent; FIG. 6 is a schematic cross-sectional view of the battery cell shown in FIG. 4; FIG. 7 is a schematic enlarged view of the battery cell at circle A in FIG. 6; and FIG. 8 is a schematic structural diagram of an adapter member of a battery cell according to some embodiments of this application.

As shown in FIGs. 4 to 8, the battery cell 7 of the embodiments of this application includes an electrode assembly 10, a housing 20, an electrode lead-out member 30, an adapter member 40, and a light absorbing layer 50. The housing 20 is provided with an accommodating cavity. The electrode lead-out member 30 is disposed at the housing 20. The electrode assembly 10 is accommodated in the accommodating cavity, where the electrode assembly 10 includes a main body portion 11 and a tab 12 led out of the main body portion 11. The adapter member 40 is configured to connect the tab 12 and the electrode lead-out member 30. The light absorbing layer 50 is applied to a welding position of the adapter member 40.

The housing 20 is a component for accommodating the electrode assembly 10. The housing 20 may be made of various materials, such as copper, iron, aluminum, steel, or aluminum alloy. The housing 20 may be of various shapes, such as cylinder or cuboid. For example, in the figure, the housing 20 is a cylinder.

The electrode assembly 10 is a component in which an electrochemical reaction takes place in the battery cell 7. The electrode assembly 10 may be a wound structure formed by a positive electrode plate, a separator, and a negative electrode plate through winding. The electrode assembly 10 may alternatively be a laminated structure formed by a positive electrode plate, a separator, and a negative electrode plate through lamination.

The main body portion 11 may include a portion of the positive electrode plate coated with an active substance layer, a portion of the negative electrode plate coated with an active substance layer, and the separator. Active substances in the active substance layers are used for electrochemical reactions with the electrolyte and the like to produce charging and discharging processes.

The tab 12 protrudes from the main body portion 11. Generally, the separator is configured to separate the positive electrode plate and the negative electrode plate, and the size of the separator is larger than the size of the positive electrode plate or the negative electrode plate, that is, the tab 12 protrudes from the separator.

For example, multiple tabs 12 are provided, and the multiple tabs 12 each include a positive electrode tab and a negative electrode tab. The positive electrode tabs and negative electrode tabs lead out the electric energy generated by the main body portion 11. The adapter member 40 can be used to connect the positive electrode tab and the electrode lead-out member 30, or to connect the negative electrode tab and the electrode lead-out member 30.

The positive electrode tab and negative electrode tab can be led out from the same end of the main body portion 11, or from opposite ends of the main body portion 11 respectively.

The electrode lead-out member 30 is at least partly exposed to the outside of the battery cell 7 for ease of connection to other components (for example, a busbar), which in turn leads out electric energy generated by the electrode assembly 10.

The electrode lead-out member 30 may be part of the housing 20, or an independent component mounted on the housing 20.

The adapter member 40 may be connected to the tab 12 or the electrode lead-out member 30 through welding. In some examples of this embodiment, the adapter member 40 is welded to the tab 12, and the adapter member 40 is connected to the electrode lead-out member 30 through adhesion, riveting, clamping, or other non-welding methods. In other examples of this embodiment, the adapter member 40 is welded to the electrode lead-out member 30, and the adapter member 40 is connected to the tab 12 through adhesion, riveting, clamping, or other non-welding methods. In some other examples of this embodiment, the adapter member 40 is welded to the tab 12 and the electrode lead-out member 30.

The welding position of the adapter member 40 may be a position where the adapter member 40 is connected to a to-be-welded component (the tab 12 or electrode lead-out member 30). During welding, part of the adapter member 40 melts at the welding position.

Before the adapter member 40 is welded to the to-be-welded component (the tab 12 or electrode lead-out member 30), the light absorbing layer 50 is applied to the surface of the adapter member 40. In this case, the light absorbing layer 50 is in a complete state.

After the coating of the light absorbing layer 50 is completed, one side of the adapter member 40 back away from the light absorbing layer 50 is enabled to abut against the to-be-welded component. In other words, the light absorbing layer 50 is disposed on the side of the adapter member 40 back away from the to-be-welded component.

When the adapter member 40 needs to be welded to the to-be-welded component, the laser is irradiated on the light absorbing layer 50. The light absorbing layer 50 has light absorbing property, which can effectively absorb laser energy and conduct the generated heat to the adapter member 40 and the to-be-welded component. Under the action of the laser, at least part of the region of the light absorbing layer 50 irradiated by the laser melts. Influenced by the light absorbing layer 50 and the laser, part of the adapter member 40 and part of the to-be-welded component also melt. The melted parts of the light absorbing layer 50 and adapter member 40, and the melted part of the to-be-welded component fuse together.

During the welding process, part of the light absorbing layer 50 on the surface of the adapter member 40 does not melt. Therefore, after the welding is completed, still part of the light absorbing layer 50 is retained on the surface of the adapter member 40.

The light absorbing layer 50 has light absorbing property, which can effectively absorb laser energy and conduct the generated heat to the adapter member 40 and the to-be-welded component. In other words, in this embodiment, as the light absorbing layer 50 is applied to the surface of the adapter member 40, the adapter member 40 can be welded to the to-be-welded component through small-power thermal conduction welding.

In this embodiment of this application, the light absorbing layer 50 is applied to the surface of the adapter member 40 to reduce reflection, increasing the energy absorption rate of the adapter member 40, and lowering the welding power, and reducing the possibility of other components of the battery cell 7 being burned, thus improving the safety of the battery cell 7.

In some embodiments, the adapter member 40 is welded to at least one of the tab 12 and the electrode lead-out member 30 to form a welded portion 60, and at least part of the light absorbing layer 50 is disposed around the welded portion 60.

In some examples, the adapter member 40 is welded to the tab 12 to form the welded portion 60, and the adapter member 40 is connected to the electrode lead-out member 30 through adhesion, riveting, clamping, or other non-welding methods. In some other examples, the adapter member 40 is welded to the electrode lead-out member 30 to form the welded portion 60, and the adapter member 40 is connected to the tab 12 through adhesion, riveting, clamping, or other non-welding methods. In still some other examples, the welded portion 60 includes a first welded portion and a second welded portion, the adapter member 40 is welded to the tab 12 to form the first welded portion, and the adapter member 40 is welded to the electrode lead-out member 30 to form the second welded portion.

During welding, the melted part of the light absorbing layer 50, the melted part of the adapter member 40, and the melted part of the to-be-welded component fuse together, solidifying to form the welded portion 60.

During the welding process, part of the light absorbing layer 50 on the surface of the adapter member 40 does not melt, or even into the welded portion 60. Therefore, after the welding is completed, still part of the light absorbing layer 50 is retained on the surface of the adapter member 40, and this part of the light absorbing layer 50 may be disposed around the welded portion 60. For example, the retained light absorbing layer 50 is connected to the welded portion 60.

In this embodiment of this application, the part of the light absorbing layer 50 retained around the welded portion 60 can reduce the risk of laser irradiation in the region of the adapter member 40 uncoated with the light absorbing layer 50 during the welding process, thereby reducing energy waste. In addition, the light absorbing layer 50 can further absorb scattered laser, reduce laser reflection, and fully absorb heat, thereby reducing the welding power.

In some embodiments, the housing 20 includes a shell 21 and an end cover 22, the shell 21 has an opening, and the end cover 22 covers the opening.

The shell 21 may be a structure with an opening at one side, and the end cover 22 is designed to cover the opening of the shell 21. Alternatively, the shell 21 may be a structure with openings at two sides, and the end cover 22 is provided in two, where the two end covers 22 cover the two openings of the shell 21 respectively.

For example, the end cover 22 is connected to the shell 21 through welding, adhesion, snap-fitting, or in another manner.

In some embodiments, the end cover 22 can serve as the electrode lead-out member 30. In another embodiment, the electrode lead-out member 30 may be an independent component mounted on the end cover 22. For example, the electrode lead-out member 30 can also be called an electrode terminal.

In some embodiments, the adapter member 40 abuts against and is welded to an end face 121 of the tab 12 back away from the main body portion 11, so as to form the welded portion 60. In some embodiments, the region of the adapter member 40 coated with the light absorbing layer 50 abuts against and is welded to the end face 121 of the tab 12 away from the main body portion 11, to form the welded portion 60.

In some embodiments, the main body portion 11 includes a separator configured to separate a positive electrode plate and a negative electrode plate, and a distance D between a region of the end face 121 used for welding to the adapter member 40 and the separator is 0.2 mm-3 mm.

The distance D refers to the minimum distance between the region of the end face 121 used for welding to the adapter member 40 and the separator. For example, when the distance between the region of the end face 121 used for welding to the adapter member 40 and the separator has multiple values, D is the minimum value among the multiple values.

In this embodiment of this application, the size of the tab 12 protruding from the main body portion 11 is small, thereby reducing the space occupied by the tab 12 and increasing the energy density of the battery cell 7. This application reduces heat generated during the welding process with the arrangement of the light absorbing layer 50, ensuring that the main body portion 11 (especially the separator of the main body portion 11) is not easily burned even if the size of the tab 12 protruding from the main body portion 11 is small.

For example, in the direction of the main body portion 11 pointing the tab 12, the value of D is 0.2 mm-3 mm.

Optionally, the value of D is 0.2 mm, 0.5 mm, 1 mm, 2 mm, or 3 mm.

In some embodiments, the distance D between the region of the end face 121 used for welding to the adapter member 40 and the separator is 0.2 mm-1 mm. In this embodiment of this application, the size of the tab 12 protruding from the main body portion 11 can be further reduced.

In some embodiments, the tab 12 and the end face 121 of the adapter member 40 are formed through flattening.

For example, the tab 12 is wound in multiple turns around the central axis of the electrode assembly 10, meaning that the tab 12 includes multiple turns of tab layers. After the winding is completed, the tab 12 is generally cylindrical, and there is a gap between two adjacent tab layers. In this embodiment of this application, the tab 12 may be treated to reduce the gap between the tab layers, facilitating welding of the tab 12 to the adapter member 40. For example, in this embodiment of this application, the tab 12 may be flattened, so that an end region of the tab 12 away from the main body portion 11 can be gathered together. The flattening process is performed to form a dense end face 121 at an end of the tab 12 away from the main body portion 11, which reduces the gap between tab layers and facilitates welding of the tab 12 to the adapter member 40.

The flattened end face 121 can better fit with the adapter member 40, thereby enhancing the connection strength between the tab 12 and the adapter member 40.

In some embodiments, the welded portion 60 is formed at the protrusion 412 of the adapter member 40. The adapter member 40 is provided with a first recess 413 at a position corresponding to the protrusion 412. The light absorbing layer 50 is at least applied to a bottom surface of the first recess 413.

The protrusion 412 is configured to abut against and be welded to a to-be-welded component, to form the welded portion 60.

The light absorbing layer 50 can be entirely applied to the bottom surface of the first recess 413 or only partially applied. For example, the light absorbing layer 50 may further be applied to other regions of the adapter member 40.

In this embodiment, the first recess 413 can position the light absorbing layer 50, facilitating the application of the light absorbing layer 50. The protrusion 412 protrudes at a position corresponding to the first recess 413, which ensures both the depth of the first recess 413 and the strength of the welded portion 60.

In some embodiments, the adapter member 40 further includes a base 411, the base 411 has a first surface 411a and a second surface 411b opposite each other, the protrusion 412 protrudes from the first surface 411a, and the first recess 413 is recessed relative to the second surface 411b. The first surface 411a faces the to-be-welded component, while the second surface 411b is back away from the to-be-welded component. Optionally, the light absorbing layer 50 may further be applied to the second surface 411b.

In some embodiments, the protrusion 412 is used for welding with the tab 12 to form the welded portion 60.

In this embodiment, the protrusion 412 can be embedded into the tab 12 to ensure tight contact between the protrusion 412 and the tab 12, reducing the risk of false welding and increasing the strength of the welded portion 60.

In some embodiments, the base 411 is plate-shaped.

In some embodiments, multiple protrusions 412 are provided and spaced apart.

In some embodiments, the adapter member 40 includes a first connecting portion 41, which includes a base 411 and a protrusion 412.

In some embodiments, the adapter member 40 further includes a second connecting portion 42 and a third connecting portion 43. The second connecting portion 42 extends from one end of the base 411 and bends to the side of the base 411 back away from the tab 12. The third connecting portion 43 extends from the end of the second connecting portion 42 away from the base 411 and bends to the side of the second connecting portion 42 back away from the first connecting portion 41. The third connecting portion 43 is configured to connect the electrode lead-out member 30. FIG. 8 shows the state of the adapter member 40 before bending.

In some embodiments, at least part of the third connecting portion 43 is clamped between the end cover 22 and the electrode lead-out member 30 to achieve the connection between the third connecting portion 43 and the electrode lead-out member 30.

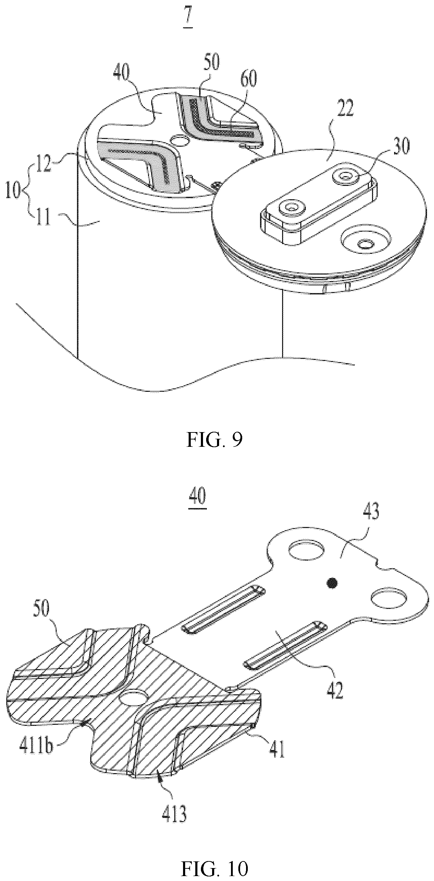

FIG. 9 is a schematic diagram of an assembly process of a battery cell according to some embodiments of this application.

Refer to FIGs. 7 to 9. In some embodiments, at least part of the light absorbing layer 50 is arranged around the welded portion 60.

This embodiment can reduce the risk of laser irradiation due to an error in the region of the adapter member 40 uncoated with the light absorbing layer 50, and improve the energy utilization rate. The annular light absorbing layer 50 can further absorb scattered laser, reduce laser reflection, and fully absorb heat, thereby reducing the welding power.

In some embodiments, the light absorbing layer 50 and the welded portion 60 are different in color.

In the assembly process of the battery cell 7, the adapter member 40 can be positioned with the welded portion 60 as a reference. This embodiment causes a color difference between the light absorbing layer 50 and the welded portion 60, making it easier for an external detection device to detect a location of the welded portion 60. This helps to position the adapter member 40 and improve the assembly efficiency of the battery cell 7.

In some embodiments, the light absorbing layer 50 is black.

In this embodiment, the black light absorbing layer 50 has better light absorbing property, and can reduce reflection, increase the energy absorption rate, lower the welding power, and reduce the possibility of other components of the battery cell 7 being burned, thus improving the safety of the battery cell 7.

In some embodiments, the light absorbing layer 50 includes a chromium-containing material. The chromium-containing material has good light-absorbing property.

In some embodiments, the light absorbing layer 50 may include copper-chromium black. Optionally, the light absorbing layer 50 also includes aluminium oxide doped into the copper-chromium black.

In some embodiments, the light absorbing layer 50 may include a black cobalt-containing ceramic pigment.

In some embodiments, an amount of chromium contained in the welded portion 60 is greater than an amount of chromium contained in an unwelded portion of the adapter member 40.

The unwelded portion of the adapter member 40 refers to part of the adapter member 40 that is not welded to the to-be-welded component.

In this embodiment, part of the chromium-containing metal melts into the welded portion 60 during the welding process. These chromium-containing metals are conductive, ensuring the current-carrying capacity of the welded portion 60 even if the chromium-containing metal melts into the welded portion 60.

In some embodiments, the thickness of the light absorbing layer 50 is 0.1 µm-50 µm. For example, the thickness of the light absorbing layer 50 is 0.1 µm, 0.2 µm, 0.5 µm, 0.6 µm, 1 µm, 2 µm, 5 µm, 10 µm, 15 µm, 20 µm, 25 µm, 35 µm, or 50 µm.

The smaller the thickness of the light absorbing layer 50, and the lower the energy absorbed by the light absorbing layer 50. If the thickness of the light absorbing layer 50 is too small, the energy absorbed by the light absorbing layer 50 is relatively low, and the power required for welding is still relatively high. The greater the thickness of the light absorbing layer 50, the more space and weight the light absorbing layer 50 occupies, and the higher the material cost. This embodiment of this application limits the thickness of the light absorbing layer 50 to 0.1 µm-50 µm, to minimize the thickness of the light absorbing layer 50 while ensuring the energy absorption rate of the light absorbing layer 50.

In some embodiments, the thickness of the light absorbing layer 50 is 0.8 µm-25 µm.

In some embodiments, surface roughness of part of the adapter member 40 coated with the light absorbing layer 50 is greater than surface roughness of part of the adapter member 40 uncoated with the light absorbing layer 50.

In this embodiment, increasing the surface roughness of part of the adapter member 40 coated with the light absorbing layer 50 allows the light absorbing layer 50 to better adhere to the adapter member 40, enhancing the connection strength between the adapter member 40 and the light absorbing layer 50, and reducing the risk of the light absorbing layer 50 falling off.

In some embodiments, the region of the adapter member 40 that needs to be coated with the light absorbing layer 50 may be sandblasted to improve the local surface roughness of the adapter member 40.

FIG. 10 is a schematic structural diagram of an adapter member of a battery cell according to some other embodiments of this application.

As shown in FIG. 10, the light absorbing layer 50 is applied to the bottom surface of the first recess 413 and the second surface 411b.

During application of the light absorbing layer 50, a coating device can apply it directly to the entire first connecting portion 41 without positioning the first recess 413, thereby improving the coating efficiency.

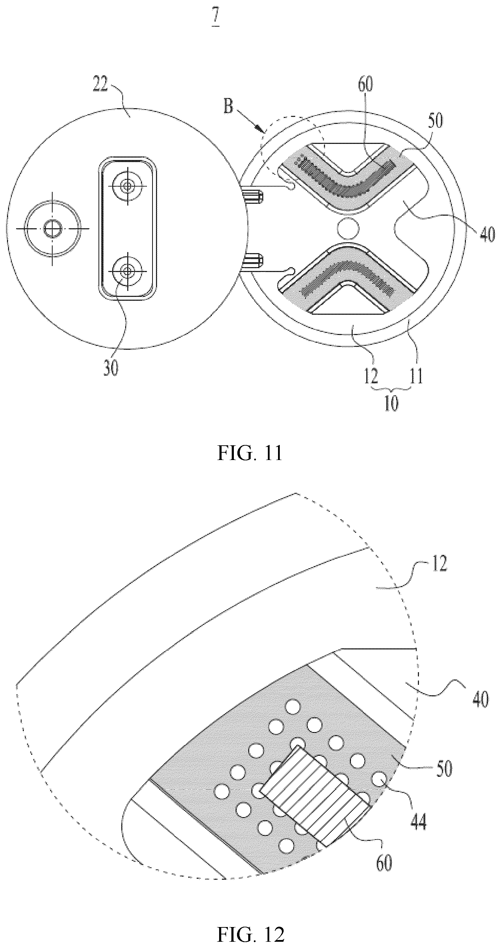

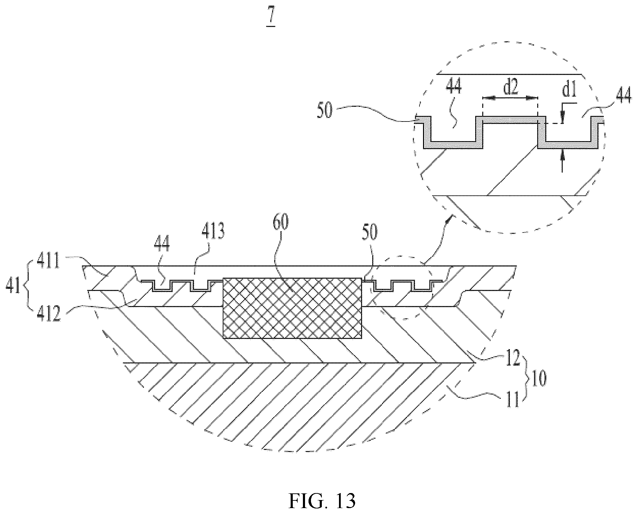

FIG. 11 is a schematic diagram of an assembly process of a battery cell according to some other embodiments of this application; FIG. 12 is a schematic enlarged view of the battery cell at circle B in FIG. 11; and FIG. 13 is a locally schematic cross-sectional view of the battery cell shown in FIG. 11.

As shown in FIGs. 11 to 13, in some embodiments, a surface of the adapter member 40 coated with the light absorbing layer 50 is provided with multiple second recesses 44, and the multiple second recesses 44 are arranged on an outer side of the welded portion 60.

In this embodiment, the adapter member 40 is provided with the multiple second recesses 44, resulting in an uneven surface of the adapter member 40, thus further reducing reflection, increasing the energy absorption rate of the adapter member 40, and lowering the welding power, reducing the possibility of other components of the battery cell 7 being burned, so as to improve the safety of the battery cell 7.

This embodiment of this application does not limit the shape of the second recess 44. For example, the second recess 44 may be cylindrical, prismatic, hemispherical, conical, or of other shapes.

In some embodiments, the region of the adapter member 40 provided with the second recess 44 is used for welding to the to-be-welded component. After welding is completed, part of the second recess 44 disappears.

In some embodiments, the light absorbing layer 50 surrounds an outer side of each of the second recesses 44.

In this embodiment, the concave surface of the second recess 44 can reduce the high reflection frequency, and the light absorbing layer 50 surrounding the outer side of the second recess 44 can absorb light. The combination of the two can better reduce reflection, improve the energy absorption rate, and reduce the welding power.

In some embodiments, the light absorbing layer 50 covers a bottom surface of the second recess 44.

In this embodiment, the area of the light absorbing layer 50 and the energy absorption rate can be increased, and the coating process of the light absorbing layer 50 can be also simplified.

In some embodiments, a thickness of the light absorbing layer 50 is less than a depth of the second recess 44.

This embodiment can avoid the second recess 44 being filled up by the light absorbing layer 50, thereby retaining the concave structure on the adapter member 40, reducing the high reflection frequency, increasing the energy absorption rate, and reducing the welding power.

In some embodiments, the depth d1 of the second recess 44 is 0.01 mm-0.5 mm.

The bottom surface of the second recess 44 may be planar or curved. For example, the bottom surface of the second recess 44 may be an arc surface. For example, the depth d1 of the second recess 44 is the maximum dimension of the second recess 44 in the thickness direction of the adapter member 40. In other words, the depth d1 of the second recess 44 is the maximum spacing thereof between the opening of the second recess 44 and the bottom surface of the second recess 44 in the thickness direction of the adapter member 40.

The greater the depth of the second recess 44, the smaller the thickness of part of the adapter member 40 opposite the bottom surface of the second recess 44. If the depth of the second recess 44 is too great, a local part of the adapter member 40 may be welded through, leading to insufficient strength of the welded portion 60. The smaller the depth of the second recess 44, the worse the effect of reducing the high reflection frequency of the second recess 44.

This embodiment limits the depth d1 of the second recess 44 to 0.01 mm-0.5 mm, on the premise of ensuring the strength of the welded portion 60, reducing the high reflection frequency, increasing the energy absorption rate, and reducing the welding power.

Optionally, the depth d1 of the second recess 44 is 0.01mm, 0.05mm, 0.1mm, 0.2mm, 0.3mm, or 0.5mm. In some embodiments, the depth d1 of the second recess 44 is 0.05 mm-0.3 mm.

In some embodiments, the area of the second recess 44 is 0.04 mm²-200 mm². For example, the area of the second recess 44 may be the area of the opening of the second recess 44.

When the adapter member 40 has a first recess 413, the second recess 44 is formed on the bottom surface of the first recess 413. The opening of the second recess 44 may be the opening of the second recess 44 formed on the bottom surface of the first recess.

The smaller the area of the second recess 44, the greater the number of second recesses 44 to be provided on the adapter member 40, increasing the process difficulty. The larger the area of the second recess 44, the worse the effect of reducing the high reflection frequency of the second recess 44.

This embodiment limits the area of the second recess 44 to 0.04 mm²-200 mm², to balance a process requirement and the effect of reducing the high reflection frequency of the second recess 44.

Optionally, the area of the second recess 44 is 0.04 mm², 0.25 mm², 1 mm², 5 mm², 10 mm², 50 mm², 100 mm², or 200 mm².

In some embodiments, the area of the second recess 44 is 0.25 mm²-100 mm².

In some embodiments, the spacing d2 between adjacent second recesses 44 is 0.1 mm-5 mm.

The spacing d2 between adjacent second recesses 44 refers to the minimum spacing between the side surfaces of the adjacent second recesses 44.

The smaller the spacing between adjacent second recesses 44, the greater the number of second recesses 44 to be provided on the adapter member 40, increasing the process difficulty. The larger the spacing between adjacent second recesses 44, the worse the effect of reducing the high reflection frequency of the second recess 44.

This embodiment limits the spacing d2 between adjacent second recesses 44 to 0.1 mm-5 mm, to balance a process requirement and the effect of reducing the high reflection frequency of the second recess 44.

Optionally, the spacing d2 between adjacent second recesses 44 is 0.1 mm, 0.2 mm, 0.5 mm, 1 mm, 2 mm, 3 mm, 4 mm, or 5 mm.

In some embodiments, the second recess 44 may be made by embossing.

In some embodiments, the region of the adapter member 40 used for providing the second recess 44 has been sandblasted.

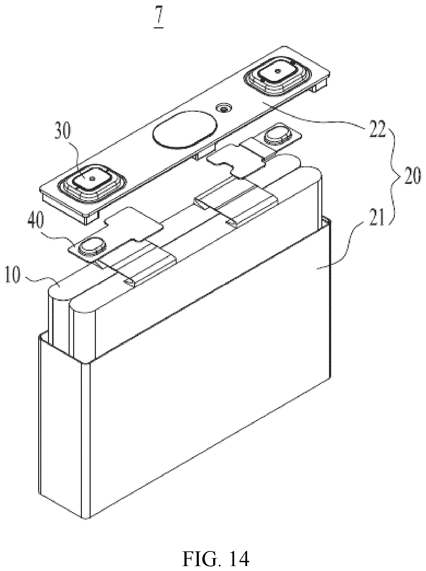

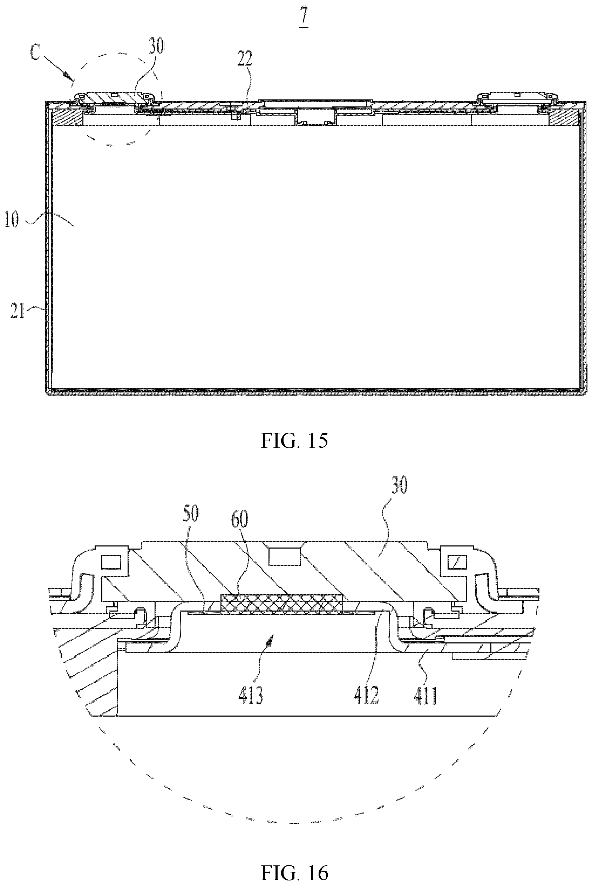

FIG. 14 is a schematic exploded view of a battery cell according to still some other embodiments of this application; FIG. 15 is a schematic cross-sectional view of the battery cell shown in FIG. 14; and FIG. 16 is a schematic enlarged view of the battery cell at circle C in FIG. 15.

As shown in FIGs. 14 to 16, in some embodiments, the housing 20 is rectangular.

In some embodiments, the adapter member 40 is welded to the electrode lead-out member 30 to form the welded portion 60.

In some embodiments, the adapter member 40 includes a base 411 and a protrusion 412. The base 411 has a first surface and a second surface opposite each other, the protrusion 412 protrudes from the first surface, and the welded portion 60 is formed on the protrusion 412. The first connecting portion 41 has a first recess 413 formed at a position corresponding to the protrusion 412, and the first recess 413 is recessed relative to the second surface. The light absorbing layer 50 is at least applied to a bottom surface of the first recess 413.

The protrusion 412 is configured to abut against and be welded to the electrode lead-out member 30.

In some embodiments, this application further provides a battery including multiple battery cells according to any one of the foregoing embodiments.

In some embodiments, this application further provides an electric apparatus, including the battery cell of any one of the foregoing embodiments, where the battery cell is configured to provide electric energy.

In some embodiments, referring to FIGs. 4 to 8, this application provides a battery cell 7. The battery cell 7 includes an electrode assembly 10, a housing 20, an electrode lead-out member 30, and an adapter member 40. The housing 20 is provided with an accommodating cavity. The electrode lead-out member 30 is disposed at the housing 20. The electrode assembly 10 is accommodated in the accommodating cavity, where the electrode assembly 10 includes a main body portion 11 and a tab 12 led out of the main body portion 11. The adapter member 40 is configured to connect the tab 12 and the electrode lead-out member 30. The surface of the adapter member 40 is coated with a light absorbing layer 50. The adapter member 40 is welded to the tab 12 to form the welded portion 60, and the light absorbing layer 50 surrounds the welded portion 60. The light absorbing layer 50 is black and includes a chromium-containing material.

The adapter member 40 includes a first connecting portion 41, which includes a base 411 and a protrusion 412. The base 411 has a first surface 411a and a second surface 411b opposite each other. The protrusion 412 protrudes from the first surface 411a and is welded to the tab 12 to form the welded portion 60. The first connecting portion 41 is provided with a first recess 413 at a position corresponding to the protrusion 412, and the first recess 413 is recessed relative to the second surface 411b. The light absorbing layer 50 is applied to a bottom surface of the first recess 413.

It should be noted that in absence of conflicts, some embodiments and features in some embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in the embodiments of this application.

## Claims

1. A battery cell, comprising:
a housing provided with an accommodating cavity;
an electrode lead-out member disposed at the housing;
an electrode assembly accommodated in the accommodating cavity, wherein the electrode assembly comprises a main body portion and a tab led out of the main body portion;
an adapter member configured to connect the tab and the electrode lead-out member; and
a light absorbing layer applied to a welding position of the adapter member.

2. The battery cell according to claim 1, wherein the adapter member is welded to at least one of the tab and the electrode lead-out member to form a welded portion, and at least part of the light absorbing layer is disposed around the welded portion.

3. The battery cell according to claim 2, wherein the at least part of the light absorbing layer surrounds the welded portion.

4. The battery cell according to claim 2 or 3, wherein the light absorbing layer and the welded portion are different in color.

5. The battery cell according to any one of claims 2 to 4, wherein the light absorbing layer comprises a chromium-containing material.

6. The battery cell according to claim 5, wherein an amount of chromium contained in the welded portion is greater than an amount of chromium contained in an unwelded portion of the adapter member.

7. The battery cell according to any one of claims 1 to 6, wherein the adapter member comprises a protrusion, and the welded portion is formed at the protrusion; and
the adapter member is provided with a first recess at a position corresponding to the protrusion, and the light absorbing layer is at least applied to a bottom surface of the first recess.

8. The battery cell according to claim 7, wherein the adapter member further comprises a base, the base has a first surface and a second surface opposite each other, the protrusion protrudes from the first surface, and the first recess is recessed relative to the second surface; and
the light absorbing layer is further applied to the second surface.

9. The battery cell according to claim 7 or 8, wherein the protrusion is configured to be welded to the tab so as to form the welded portion.

10. The battery cell according to any one of claims 2 to 9, wherein a surface of the adapter member coated with the light absorbing layer is provided with multiple second recesses, and the multiple second recesses are arranged on an outer side of the welded portion.

11. The battery cell according to claim 10, wherein the light absorbing layer surrounds an outer side of each of the second recesses.

12. The battery cell according to claim 10 or 11, wherein the light absorbing layer covers a bottom surface of the second recess.

13. The battery cell according to claim 12, wherein a thickness of the light absorbing layer is less than a depth of the second recess.

14. The battery cell according to any one of claims 10 to 13, wherein the depth of the second recess is 0.01 mm-0.5 mm.

15. The battery cell according to any one of claims 10 to 14, wherein an area of the second recess is 0.04 mm²-200 mm², and preferably, the area of the second recess is 0.25 mm²-100 mm².

16. The battery cell according to any one of claims 10 to 15, wherein a spacing of 0.1 mm-5 mm is present adjacent two of the second recesses.

17. The battery cell according to any one of claims 2 to 16, wherein the adapter member abuts against and is welded to an end face of the tab back away from the main body portion, so as to form the welded portion.

18. The battery cell according to claim 17, wherein the main body portion comprises a separator configured to separate a positive electrode plate and a negative electrode plate, and a distance between a region of the end face used for welding to the adapter member and the separator is 0.2 mm-3 mm; and optionally, the distance between the region of the end face used for welding to the adapter member and the separator is 0.2 mm-1 mm.

19. The battery cell according to claim 18, wherein the tab and the end face of the adapter member are formed through flattening.

20. The battery cell according to any one of claims 1 to 19, wherein the thickness of the light absorbing layer is 0.1 µm-50 µm; and optionally, the thickness of the light absorbing layer is 0.8 µm-25 µm.

21. The battery cell according to any one of claims 1 to 20, wherein the light absorbing layer is black.

22. The battery cell according to any one of claims 1 to 21, wherein surface roughness of part of the adapter member coated with the light absorbing layer is greater than surface roughness of part of the adapter member uncoated with the light absorbing layer.

23. A battery, comprising the battery cell according to any one of claims 1 to 22.

24. An electric apparatus, comprising the battery cell according to any one of claims 1 to 22, wherein the battery cell is configured to provide electric energy.
